# DEMANDE DE BREVET EUROPEEN

(11) **EP 2 897 085 A1**
(43) Date de publication de la demande: **22.07.2015**
(21) Numéro de dépôt: 14305067.2
(22) Date de dépôt: 20.01.2014
(51) Int. Cl.: G06K 19/077, G09F 3/08

(54) **Dispositif électronique portable d'identification numérique comprenant un interrupteur**

(71) Demandeur: Gemalto SA, 92190 Meudon (FR)
(72) Inventeur: Fine, Jean-Yves, 13705 La Ciotat (FR); Rhelimi, Alain, 13705 La Ciotat (FR)

(57) **Abrégé**

L'invention porte sur un dispositif (10) électronique portable comprenant un circuit électronique équipé d'un interrupteur. Le dispositif est plus particulièrement caractérisé en ce que l'interrupteur est intégré dans un système d'attache amovible en deux parties, une première partie étant fixée sur un article (20) porté par un utilisateur dudit dispositif électronique portable et une deuxième partie étant fixée sur ledit dispositif (10) électronique portable, et en ce que ledit dispositif électronique portable est apte à être attaché ou détaché dudit article (20).

## Description

### [Domaine de l'invention]

L'invention concerne le domaine technique des systèmes d'identification d'un individu au cours d'une transaction électronique. Elle concerne plus particulièrement des dispositifs personnels d'identification numériques. Elle concerne, de manière préférée, des dispositifs personnels d'identification numériques pour effectuer des communications à travers le corps, tel que le dispositif de type e-Go (marque déposée) décrit dans le brevet EP1695296 B1 ou sur le site http://ego-projet.eu/.

### [Art Antérieur]

Le brevet EP1695296 B1, déposé par la demanderesse, décrit le principe d'un tel dispositif électronique portable de communication à travers le corps. Dans un premier temps, lorsque l'utilisateur autorisé installe son dispositif électronique portable à proximité de son corps, il doit s'authentifier grâce à un capteur biométrique intégré au dispositif. Ainsi, par exemple, l'authentification préalable de l'utilisateur peut être réalisée par une numérisation de son empreinte digitale. Le dispositif électronique portable de communication à travers le corps doit être porté par l'utilisateur pour pouvoir initier une communication avec un terminal grâce à une communication à travers le corps. Le dispositif doit en effet être disposé à proximité du corps de l'utilisateur, c'est-à-dire à une distance inférieure ou égale à 5cm, afin que la communication à travers le corps puisse avoir lieu. Il doit donc être en permanence porté par l'utilisateur, attaché sur un vêtement ou sur un accessoire. Lorsque l'utilisateur préalablement authentifié souhaite réaliser une transaction électronique, il doit alors toucher le terminal avec lequel il souhaite réaliser la transaction, afin d'initier une communication à travers son corps entre le terminal et le dispositif électronique portable. Lorsque la communication est initiée entre les deux appareils, la transaction est ensuite réalisée par le biais d'un deuxième canal de communication, bidirectionnel, à plus haut débit, par ondes radiofréquences.

Cependant, si pour une raison ou une autre, par exemple en cas de vol ou d'accident, le dispositif électronique portable est détaché de son support et hors de portée de son utilisateur, il faut éviter qu'un autre utilisateur non autorisé ne l'utilise. Par conséquent, dans une telle situation, le fonctionnement du dispositif électronique portable doit être arrêté, ou au moins l'authentification du porteur doit être annulée.

Pour pouvoir faire cela, il faut pouvoir détecter une séparation entre le dispositif électronique portable et son utilisateur.

Des moyens de détection d'une solidarisation / désolidarisation du dispositif au porteur ont déjà été envisagés et décrits dans la demande de brevet WO2013/024058 déposée par la demanderesse. Ces moyens de détection sont disposés dans un bracelet de montre. Ils comprennent un circuit relié au dispositif électronique portable et muni de plaques capacitives disposées aux extrémités du bracelet de montre, de sorte que lorsque le bracelet est fermé les plaques se chevauchent et ferment ainsi le circuit, et lorsque le bracelet est ouvert les plaques sont éloignées et coupent le circuit.

Ces moyens de détection sont uniquement adaptés à un bracelet. Or, on souhaite pouvoir fixer les dispositifs électroniques portables de communication à travers le corps sur n'importe quel article ou accessoire susceptible d'être porté par un utilisateur. Si le dispositif doit être fixé sur un vêtement par exemple, il n'est pas possible d'utiliser les moyens de détection qui viennent d'être décrits.

Par conséquent, la demanderesse a cherché des moyens alternatifs permettant de détecter si le dispositif électronique portable est attaché ou séparé de l'utilisateur autorisé.

### [Problème technique]

L'invention a donc pour but de remédier à au moins un des inconvénients de l'art antérieur. En particulier, l'invention vise à proposer une solution simple, peu coûteuse et facile à implémenter pour réaliser des moyens de détection d'une association/séparation du dispositif électronique portable et de l'utilisateur autorisé.

### [Résumé de l'invention]

Le principe de l'invention repose sur le fait qu'on réalise un interrupteur apte à couper ou non le circuit d'alimentation en énergie du dispositif électronique portable, ou au moins à annuler une authentification en cours, et à intégrer cet interrupteur dans un système d'attache amovible du dispositif électronique portable sur un article porté par l'utilisateur.

A cet effet, l'invention a pour objet un dispositif électronique portable comprenant un circuit électronique équipé d'un interrupteur, caractérisé en ce que ledit interrupteur est intégré dans un système d'attache amovible en deux parties, une première partie étant fixée sur un article porté par un utilisateur dudit dispositif électronique portable et une deuxième partie étant fixée sur ledit dispositif électronique portable, et en ce que ledit dispositif électronique portable est apte à être attaché ou détaché dudit article.

Ainsi, dès lors que le dispositif électronique portable est détaché de l'article porté par l'utilisateur autorisé, qui peut être un vêtement, un accessoire, ou un bijou par exemple, l'interrupteur est ouvert, permettant ainsi d'arrêter le dispositif électronique portable ou au moins d'annuler l'authentification de l'utilisateur. Grâce à cet interrupteur, un utilisateur non autorisé, ne pourra donc pas initier de communication avec un terminal pour réaliser une transaction électronique à la place de l'utilisateur autorisé.

Selon d'autres caractéristiques optionnelles du dispositif :
- le système d'attache en deux parties est choisi parmi l'un au moins des systèmes suivants : bandes autoagrippantes, bouton pression, système d'agrafe ou de crochet, fermoir de bijou,
- l'article porté par l'utilisateur est choisi parmi au moins l'un des articles suivants : vêtement, maillot de bain, gant, ceinture, chapeau, chaussure, bijou,
- l'interrupteur est un interrupteur physique ou logique, à effet capacitif, électrique, optique, ou magnétique,
- le dispositif électronique portable constitue un module de communication à travers le corps,
- l'interrupteur est un interrupteur à effet capacitif et comprend une première plaque métallique intégrée dans la première partie du système d'attache fixée sur l'article porté par l'utilisateur, et deux autres plaques métalliques disposées côte à côte et intégrées dans la deuxième partie dudit système d'attache, fixée audit dispositif électronique, chacune desdites deux autres plaques métalliques étant respectivement reliée à un générateur et à un détecteur d'impulsions électriques,
- la première partie du système d'attache comprend une première bande autoagrippante et la deuxième partie du système d'attache comprend au moins une deuxième bande autoagrippante, complémentaire de la première,
- l'interrupteur comprend un circuit logique pourvu d'une résistance de tirage,
- le système d'attache est un bouton pression dont la fiche mâle, fixée sur ledit article porté par ledit utilisateur, constitue une première partie de l'interrupteur et est apte à contacter deux points de contact de la fiche femelle, fixée sur le corps dudit dispositif électronique, lesdits deux points de contact étant électriquement reliés au circuit logique comprenant la résistance de tirage,
- les fiches mâle et femelle du bouton pression comprennent des plages de contact dédiées à une interconnexion électrique.

### [Brève description des figures]

D'autres particularités et avantages de l'invention apparaitront à la lecture de la description suivante faite à titre d'exemple illustratif et non limitatif, en référence aux Figures annexées qui représentent :
- La Figure 1, un schéma de principe d'un dispositif électronique portable équipé d'un interrupteur selon un premier mode de réalisation,
- La Figure 2, un schéma de principe d'un dispositif électronique portable équipé d'un interrupteur selon un autre mode de réalisation.

### [Description]

L'invention s'applique à tout type de dispositif électronique portable d'identification numérique. Dans les exemples décrits ci-après, le dispositif électronique est un dispositif personnel d'identification comprenant un canal de communication monodirectionnel à travers le corps et un autre canal de communication bidirectionnel radiofréquence, tel que décrit dans la demande de brevet EP1695296 B1. Cependant, le dispositif selon l'invention ne se limite pas à cet exemple et l'invention s'applique à tout dispositif électronique portable comprenant un circuit électronique équipé d'un interrupteur. L'invention s'applique notamment à tout dispositif électronique portable d'identification et de communication sécurisée, nécessitant une authentification préalable de l'utilisateur puis une communication sécurisée avec un terminal pour effectuer une transaction électronique quelconque.

De manière avantageuse, l'interrupteur du dispositif électronique portable est intégré dans un système d'attache amovible en deux parties. Une première partie de ce système d'attache, et donc de l'interrupteur, est fixée sur un article porté par l'utilisateur du dispositif électronique, tandis que la deuxième partie du système d'attache, et donc de l'interrupteur, est fixée sur le dispositif électronique portable.

Ainsi, dès lors que le système d'attache est ouvert, c'est-à-dire dès lors que le dispositif électronique portable est détaché de l'article porté par l'utilisateur, cela signifie que le dispositif est séparé l'utilisateur et susceptible d'être utilisé par une personne non autorisée. Dans ce cas, l'interrupteur est donc dissocié en deux parties et ouvert, si bien que le circuit d'alimentation du dispositif est coupé, ou au moins la fonction d'authentification, de sorte qu'aucun autre utilisateur non autorisé ne pourra s'authentifier et utiliser le dispositif en vue de réaliser une transaction électronique.

L'interrupteur peut être un interrupteur physique ou un interrupteur logique par exemple.

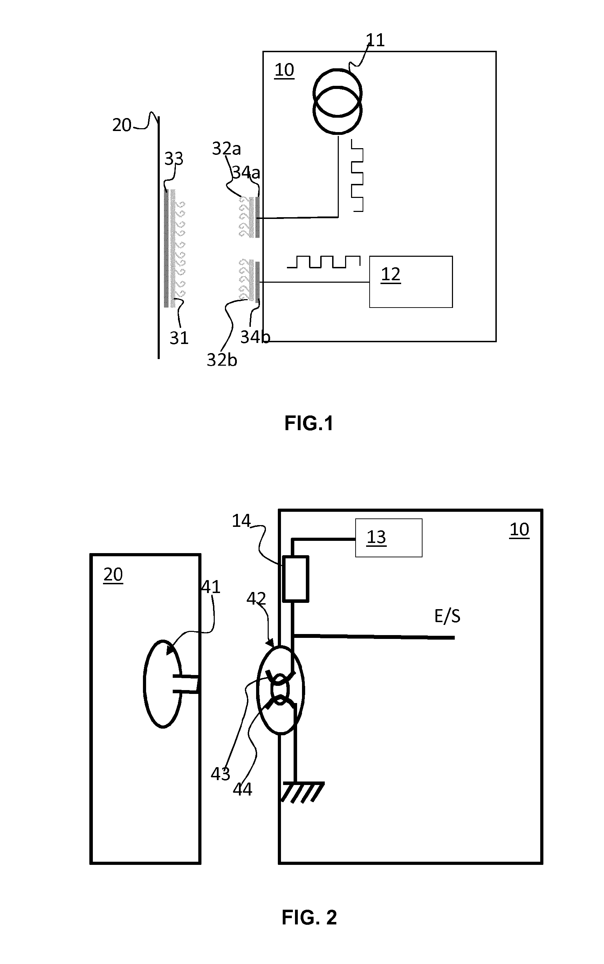

Un premier mode de réalisation d'un tel interrupteur intégré dans un système d'attache amovible en deux parties est schématisé sur la Figure 1. Sur cette Figure, le dispositif électronique portable de communication à travers le corps est référencé 10. Tous les composants du circuit électronique du dispositif, tel que décrits dans le brevet EP1695296 B1 ne sont pas représentés ici, seuls les composants de l'interrupteur équipant le circuit électronique sont représentés.

Selon ce premier mode de réalisation, l'interrupteur est un interrupteur à effet capacitif. Pour cela, le système d'attache comprend des plaques métalliques, de préférence flexibles, intégrées dans ses deux parties. Plus précisément, le système d'attache peut par exemple se présenter sous la forme d'une bande autoagrippante. Une bande autoagrippante, également connue sous la dénomination « velcro », se présente sous forme de deux bandes recouvertes chacune d'une texture différente, de sorte qu'elles permettent d'obtenir rapidement une liaison amovible. Une première bande autoagrippante 31, renfermant une plaque métallique flexible 33, est fixée sur un article 20 porté par l'utilisateur du dispositif électronique. Au moins une deuxième bande 32, complémentaire de la première, est fixée sur le dispositif électronique 10. Sur la Figure 1, deux bandes 32a, 32b complémentaires de la première 31, sont représentées. Qu'il y est une ou deux bandes velcro 32a, 32b complémentaires de la première 31, elle(s) renferme(nt) deux plaques métalliques 34a, 34b, qui peuvent être flexibles, disposées côtes à côtes. Le dispositif électronique 10 comprend en outre un générateur 11 d'impulsions électriques relié à la première plaque métallique 34a fixée sur le dispositif 10 électronique portable et un détecteur d'impulsions 12 relié à la deuxième plaque métallique 34b fixée sur le dispositif 10 électronique.

Lorsque le système d'attache velcro est en position fermée, c'est-à-dire lorsque le dispositif 10 électronique portable est attaché à l'article 20 porté par l'utilisateur, les impulsions électriques générées dans le générateur 11 et transmises vers la première plaque métallique 34a du dispositif, sont réfléchies, par effet capacitif, par la plaque métallique 31 fixée sur l'article 20 et renvoyées vers la deuxième plaque 34b du dispositif électronique, indiquant au détecteur 12 d'impulsions qui les reçoit que le système d'attache, et par conséquent l'interrupteur intégré, est en position fermée.

Lorsque le dispositif 10 électronique portable est détaché de l'article 20 porté par l'utilisateur, le système d'attache, et par conséquent l'interrupteur capacitif intégré, est en position ouverte. Dans ce cas, il n'y a plus de couplage capacitif, et le détecteur 12 détecte que le dispositif électronique est détaché de l'article. Par conséquent le fonctionnement du dispositif électronique est arrêté, ou tout au moins la session d'authentification de l'utilisateur est annulée.

Cet interrupteur présente l'avantage d'être peu coûteux et très simple à réaliser. Les bandes autoagrippantes peuvent être fixées sur n'importe quel support par couture, ou collage ou thermocollage par exemple, de manière rapide. En cas de vol, il sera très difficile d'arracher le dispositif électronique de manière discrète, du fait du bruit produit lors de la séparation des bandes velcro complémentaires.

Selon un autre mode de réalisation, illustré sur la Figure 2, l'interrupteur est un interrupteur logique intégré dans un bouton pression par exemple. Dans ce cas, la fiche mâle 41 du bouton pression est avantageusement fixée sur l'article 20 porté par l'utilisateur, tandis que la fiche femelle 42 du bouton pression est fixée sur le dispositif électronique 10. La fiche femelle 42 du bouton comprend deux lames métalliques flexibles 43, 44 à l'intérieur qui enserrent la fiche mâle du bouton lorsque celle-ci en enfichée dans la fiche femelle. De manière avantageuse, les deux lames flexibles 43, 44 de la fiche femelle définissent des points de contact et sont reliées à un circuit logique, bien connu sous la dénomination anglo-saxone « pull up- pull down », comprenant une résistance de tirage 14. La résistance de tirage a une valeur élevée, par exemple de l'ordre de 100kohms.

De préférence, le bouton pression est spécifiquement adapté pour une bonne conduction électrique et pour être raccordé électriquement au circuit logique. A cet effet, les parties métallisées destinées à assurer une interconnexion par contact électrique peuvent comporter des zones traitées localement, par exemple revêtues de cuivre, traitées anticorrosion. Les fiches mâle et/ou femelle du bouton pression peuvent comporter respectivement des plages métallisées dédiées à l'interconnexion électrique ou aptes à être raccordées notamment par soudure ou pression de contact pour un bon contact électrique.

Lorsque le bouton pression est en position fermée, autrement dit lorsque le dispositif électronique portable 10 est attaché à l'article 20 porté par l'utilisateur par enfichage de la fiche mâle 41 du bouton dans la fiche femelle 42, la fiche mâle établit un contact entre les lames 43, 44 de la fiche femelle, de sorte que le circuit logique impose un niveau logique bas, ou « 0 » logique, vers les connecteurs d'entrée / sortie E/S du dispositif électronique 10, indiquant ainsi que le dispositif est attaché à l'article 20 porté par l'utilisateur. La présence de la résistance de tirage 14 permet l'établissement d'une différence de potentiel entre la masse et la tension d'alimentation VDD fournie par la batterie 13 du dispositif électronique, de sorte que le dispositif électronique 10 portable peut fonctionner normalement.

En revanche, lorsque le dispositif 10 électronique portable est détaché de l'article 20 porté par l'utilisateur, les deux parties 41, 42 du bouton pression, et par conséquent de l'interrupteur logique intégré, sont séparées. Il n'y a donc plus de contact entre les lames 43, 44 de la fiche femelle, et le circuit logique impose un niveau haut, ou « 1 » logique, vers les connecteurs d'entrée / sortie E/S du dispositif, indiquant ainsi que le dispositif électronique 10 portable est détaché et séparé de l'article 20 porté par l'utilisateur.

Cet interrupteur présente l'avantage d'être peu coûteux et très simple à réaliser. Les boutons pression sont très répandus dans le commerce et sont peu coûteux. Il existe des pinces de fixation pour fixer facilement et rapidement les parties du bouton sur différents articles. La partie femelle pourra être fixée par n'importe quel moyen connu sur le dispositif électronique tel que le collage, la soudure, l'insertion en force etc...

Dans les deux modes de réalisation qui viennent d'être décrits, les systèmes d'attache en deux parties de type velcro ou bouton pression sont très répandus et peu coûteux. Ils sont faciles à fixer sur n'importe quel support. Ils présentent en outre l'avantage de s'adapter à n'importe quel facteur de forme du dispositif électronique. Ainsi, ils pourront être fixés sur n'importe quel article destiné à être porté par un utilisateur, c'est-à-dire un vêtement, un maillot de bain, un accessoire de type ceinture, chapeau, gant, chaussure, bracelet de montre, bijou par exemple.

Le dispositif électronique portable pourra également se présenter sous différents facteurs de forme et être fixé sur un sous-vêtement, ou à l'intérieur d'une veste, ou sur un bracelet de montre par exemple.

Les systèmes d'attache qui viennent d'être décrits et les interrupteurs capacitif et logique intégrés sont des exemples préférés de réalisation. L'invention ne se limite toutefois pas à ces exemples. La condition repose sur le fait que le système d'attache, et l'interrupteur intégré, soit amovible et en deux parties, une partie fixée sur l'accessoire porté et l'autre partie fixée sur le dispositif électronique portable. D'autres systèmes d'attache amovible en deux parties sont donc envisageables, comme par exemple un fermoir de bijou, tel que celui d'une boucle d'oreille ou d'une épingle à chapeau par exemple, ou encore un système d'agrafe ou de crochet par exemple. Ces systèmes d'attache sont de préférence spécifiquement adaptés pour une bonne conduction électrique, tout comme le bouton pression, et leurs parties métallisées, destinées à assurer l'interconnexion par contact électrique, peuvent comporter des zones traitées localement et définir par exemple des plages métallisées d'interconnexion.

D'autres technologies d'interrupteurs pourront également être envisagées tel qu'un interrupteur optique par exemple, équipé, côté dispositif électronique, d'un générateur et d'un détecteur d'ondes lumineuses reliés à des guides d'onde et, côté article porté par l'utilisateur, d'un miroir réfléchissant. Un tel interrupteur est cependant plus complexe à réaliser, et donc plus coûteux que les deux solutions préférés de l'invention.

Selon une autre variante, l'interrupteur pourra également être un interrupteur magnétique, équipé d'un aimant du côté de l'article porté par exemple. Cependant, dans ce cas le champ magnétique créé par l'aimant risque de perturber le fonctionnement de l'antenne radiofréquence du dispositif électronique portable, permettant la communication radiofréquence avec le terminal lors de la transaction électronique. Cette solution présente donc moins d'intérêt que les deux modes de réalisation préférés décrits ci-dessus.

Une autre solution, consisterait à placer une étiquette passive, apte à communiquer par ondes radiofréquences ou infrarouge par exemple, sur la partie du système d'attache fixée sur l'article porté par l'utilisateur, tandis que le dispositif électronique serait équipé d'un lecteur d'étiquette. Dans ce cas, lorsque le système d'attache est en position fermée, c'est-à-dire que le dispositif électronique portable est attaché à l'article porté, l'étiquette reçoit des signaux émis par le lecteur et renvoie au lecteur un signal contenant une information, par exemple un identifiant. Ainsi, le lecteur en déduit la présence du dispositif 10 sur l'article 20. Lorsque le dispositif portable est détaché de l'article, le lecteur est trop éloigné et ne peut plus lire l'étiquette. Cependant, cette solution n'est pas préférée car assez complexe à mettre en oeuvre pour intégrer un lecteur supplémentaire dans le dispositif portable et une étiquette dans une partie du système d'attache. De plus, le lecteur est en permanence en fonctionnement et requiert par conséquent une consommation d'énergie permanente. Une telle solution, bien qu'envisageable, est donc relativement coûteuse et présente moins d'intérêt que les modes de réalisation préférés décrits ci-dessus.

## Revendications

1. Dispositif (10) électronique portable comprenant un circuit électronique équipé d'un interrupteur, **caractérisé en ce que** ledit interrupteur est intégré dans un système d'attache amovible en deux parties, une première partie étant fixée sur un article (20) porté par un utilisateur dudit dispositif (10) électronique portable et une deuxième partie étant fixée sur ledit dispositif électronique portable, et **en ce que** ledit dispositif (10) électronique portable est apte à être attaché ou détaché dudit article (20).

2. Dispositif électronique portable selon la revendication 1, **caractérisé en ce que** le système d'attache en deux parties est choisi parmi l'un au moins des systèmes suivants : bandes autoagrippantes, bouton pression, système d'agrafe ou de crochet, fermoir de bijou.

3. Dispositif électronique portable selon l'une des revendications 1 à 2, **caractérisé en ce que** l'article porté par ledit utilisateur est choisi parmi au moins l'un des articles suivants : vêtement, maillot de bain, gant, ceinture, chapeau, chaussure, bijou.

4. Dispositif électronique portable selon l'une des revendications 1 à 3, **caractérisé en ce que** ledit interrupteur est un interrupteur physique ou logique, à effet capacitif, électrique, optique, ou magnétique.

5. Dispositif électronique portable selon l'une des revendications 1 à 4, **caractérisé en ce qu'**il constitue un module de communication à travers le corps.

6. Dispositif électronique portable selon l'une des revendications 1 à 5, **caractérisé en ce que** l'interrupteur est un interrupteur à effet capacitif et comprend une première plaque métallique (33) intégrée dans la première partie (31) du système d'attache fixée sur l'article (20) porté par l'utilisateur, et deux autres plaques métalliques (34a, 34b) disposées côte à côte et intégrées dans la deuxième partie (32a, 32b) dudit système d'attache, fixée audit dispositif (10) électronique, chacune desdites deux autres plaques métalliques étant respectivement reliée à un générateur (11) et à un détecteur (12) d'impulsions électriques.

7. Dispositif électronique portable selon la revendication 6, **caractérisé en ce que** la première partie du système d'attache comprend une première bande autoagrippante (31) et la deuxième partie du système d'attache comprend au moins une deuxième bande autoagrippante (32a, 32b), complémentaire de la première.

8. Dispositif électronique portable selon l'une des revendications 1 à 5, **caractérisé en ce que** l'interrupteur comprend un circuit logique pourvu d'une résistance de tirage (14).

9. Dispositif électronique portable selon la revendication 8, **caractérisé en ce que** le système d'attache est un bouton pression dont la fiche mâle (41), fixée sur ledit article (20) porté par ledit utilisateur, constitue une première partie de l'interrupteur et est apte à contacter deux points de contact (43, 44) de la fiche femelle (42), fixée sur le corps dudit dispositif (10) électronique, lesdits deux points de contact (43, 44) étant électriquement reliés au circuit logique comprenant la résistance de tirage (14).

10. Dispositif électronique portable selon la revendication 9, **caractérisé en ce que** les fiches mâle et/ou femelle du bouton pression comprennent des plages de contact dédiées à une interconnexion électrique.
